# EUROPEAN PATENT APPLICATION

(11) **EP 2 293 547 A2**
(43) Date of publication of application: **09.03.2011**
(21) Application number: 10170279.3
(22) Date of filing: 21.07.2010
(51) Int. Cl.: H04N 5/445

(54) **Method for providing program information and display apparatus using the same**

(30) Priority: 25.08.2009 KR 20090078707
(71) Applicant: SAMSUNG ELECTRONICS CO., LTD., Suwon-si Gyeonggi-do 442-742 (KR)
(72) Inventor: Ko, Chang-seog, Gyeonggi-do (KR); Kwon, Yong-hwan, Gyeonggi-do (KR); Kim, Won-il, Gyeonggi-do (KR); Han, Ji-youn, Gyeonggi-do (KR)
(74) Representative: Davies, Robert Ean

(57) **Abstract**

A method for providing program information and a display apparatus using the same are provided. A method for providing program information includes extracting program information based on a finish time of a program, and generating and displaying a program information screen based on the extracted program information. Accordingly, since program information which the user actually needs is selectively provided, the user may view a program information screen with greater view stability.

## Description

### CROSS-REFERENCE TO RELATED APPLICATIONS

This application claims priority from Korean Patent Application No. 10-2009-0078707, filed on August 25, 2009 in the Korean Intellectual Property Office, the disclosure of which is incorporated herein by reference in its entirety.

### BACKGROUND

### 1. Field

Apparatuses and methods consistent with the exemplary embodiments relate to a method for providing program information and a display apparatus using the same, and more particularly, to a method for selectively providing program information which a user actually needs, thereby providing high view stability of the program information, and a display apparatus using the same.

### 2. Description of the Related Art

It is common to supply conventional television (TV) broadcast program information using publications such as newspaper, TV, magazine, and the like. However, in digital multi-channel broadcasting, since a plurality of channels are provided, a user may have so many choices and it becomes complicated to select a program.

In digital multi-channel broadcasting, an electronic program guide (EPG) providing a program table or information regarding each program is supplied as a basic service.

As technology has developed, the user may use diverse broadcast channels through a variety of channels. In addition, as the Internet communication is popularized, the TV may be connected to an Internet network.

However, since there are a variety of available programs using TV, it is difficult for the user to easily know which programs are provided. This is because the EPG has a restriction in space due to being provided on a TV screen, so it is difficult to provide multiple program information through the EPG at a time.

Furthermore, a conventional method for providing program information overlooks the fact that program information which the user wishes to know is not a broadcast program to be broadcast in the far future, but a current broadcast program of each channel or a subsequent broadcast program following the current broadcast program of each channel.

Therefore, there is a need for methods for the user to identify program information of a TV with greater ease and convenience.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

An aspect provides a method for providing program information in order for the user to easily and conveniently identify program information of a TV, and a display apparatus using the same.

According to an exemplary aspect, there is provided a method for providing program information, the method including generating a program information screen for channel, the program information screen displaying only information regarding a current broadcast program of each channel, or both the information regarding the current broadcast program and information regarding a subsequent broadcast program following the current broadcast program of each channel based on a finish time of the current broadcast program, and displaying the generated program information screen.

In the generating the program information screen, in a case of a channel having a remaining running time of the current broadcast program which is within a preset range, both the information regarding the current broadcast program and the information regarding the subsequent broadcast program of the channel may be displayed.

In the generating the program information screen, in a case of a channel having a remaining running time of the current broadcast program which is not within a preset range, only the information regarding the current broadcast program of the channel may be displayed.

Generating the program information screen may include itemizing program information and configuring the program information screen according to each channel so that a user can select an item, and, in the displaying, if an item is selected on the program information screen, the current broadcast program of a channel corresponding to the selected item may be displayed.

On the program information screen, the information regarding the current broadcast program and the information regarding the subsequent broadcast program may be displayed in different manners.

The information regarding the current broadcast program may contain the finish time of the current broadcast program.

In the generating the program information screen, the information regarding the subsequent broadcast program may be displayed according to whether or not a remaining running time of the current broadcast program is within a preset range, and the preset range may be changed by the user, and may be set differently according to a channel, genre of program, or a program broadcast time.

According to another exemplary aspect, there is provided a method for providing program information, the method including if a command to display program information is input, generating a program information screen, the program information screen displaying only information regarding a current broadcast program, or both the information regarding the current broadcast program and information regarding a subsequent broadcast program following the current broadcast program according to a time in which the command is input, and displaying the generated program information screen.

According to yet another exemplary aspect, there is provided a display apparatus including a control unit which generates a program information screen for channels, the program information screen displaying only information regarding a current broadcast program of each channel, or both the information regarding the current broadcast program and information regarding a subsequent broadcast program following the current broadcast program based on a finish time of the current broadcast program, and a display unit which displays the program information screen.

In a case of a channel having a remaining running time of the current broadcast program which is within a preset range, the control unit may configure the program information screen to display both the information regarding the current broadcast program and the information regarding the subsequent broadcast program of the channel.

In a case of a channel having a remaining running time of the current broadcast program which is not within a preset range, the control unit may configure the program information screen to display only the information regarding the current broadcast program of the channel.

The control unit may generate the program information screen which itemizes and display program information according to each channel so that a user can select an item, and if an item is selected, the control unit may control the display unit to display the current broadcast program of a channel corresponding to the selected item.

On the program information screen, the control unit may configure the program information screen to display the information regarding the current broadcast program and the information regarding the subsequent broadcast program in different manners.

The information regarding the current broadcast program may contain the finish time of the current broadcast program.

The control unit may display the information regarding the subsequent broadcast program according to whether or not a remaining running time of the current broadcast program may be within a preset range, and the preset range may be changed by the user, and may be set differently according to a channel, genre of program, or a program broadcast time.

According to yet another exemplary aspect, there is provided a display apparatus, including a control unit which if a command to display program information is input, generate a program informatin screen, the program information screen display only information regarding a current broadcast program, or both the information regarding the current broadcast program and information regarding a subsequent broadcast program following the current broadcast program according to on a time in which the command is input, and a display unit which displays the program information screen.

According to yet another exemplary aspect, there is provided a method for displaying electronic program guide information, the method including: displaying program information, the displaying including: first displaying a list of titles of currently broadcast programs for a plurality of channels; or second displaying the list of titles of currently broadcast programs for the plurality of channels and a title of a subsequently broadcast program, wherein the second displaying is performed when a corresponding one of the currently broadcast programs is to finish within a predetermined period of time.

### BRIEF DESCRIPTION OF THE DRAWINGS

The above and/or other aspects will be more apparent by describing certain exemplary embodiments with reference to the accompanying drawings, in which:
FIG. 1 is a schematic block diagram of a digital television according to an exemplary embodiment;
FIG. 2 illustrates a program information screen according to an exemplary embodiment;
FIGs. 3A to 3D illustrate the process of changing a channel according to an exemplary embodiment; and
FIG. 4 is a flow chart illustrating a method for providing broadcast program information according to an exemplary embodiment.

### DETAILED DESCRIPTION OF EXEMPLARY EMBODIMENTS

Certain exemplary embodiments will now be described in greater detail with reference to the accompanying drawings.

In the following description, like drawing reference numerals are used for like elements, even in different drawings. The matters defined in the description, such as detailed construction and elements, are provided to assist in a comprehensive understanding. However, the exemplary embodiments can be practiced without those specifically defined matters. Also, well-known functions or constructions are not described in detail since they would obscure the exemplary embodiments with unnecessary detail. Expression such as "at least one of," when preceding a list of elements, modifies the entire list of elements and does not modify the individual elements of the list.

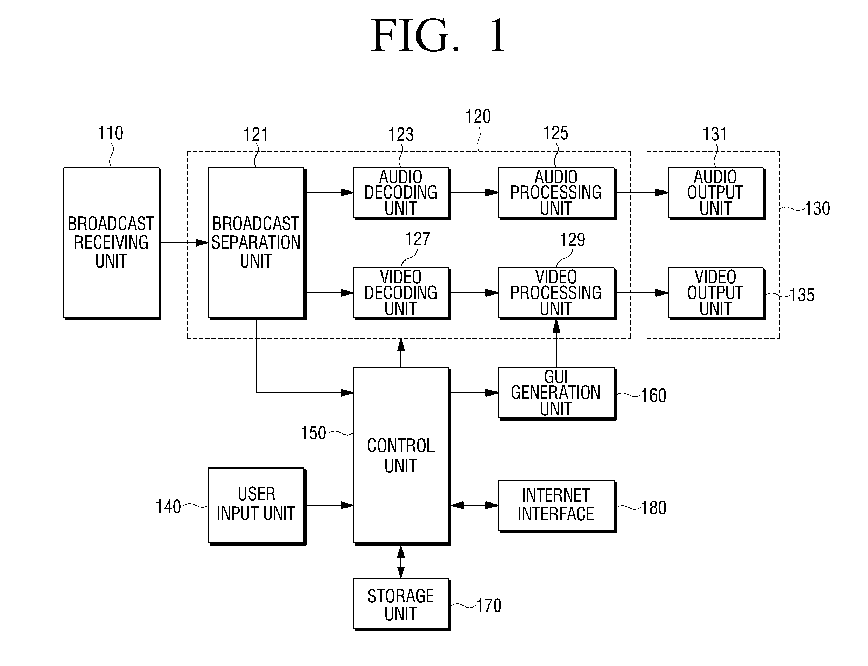

FIG. 1 is a schematic block diagram of a digital television (DTV) according to an exemplary embodiment. The DTV is a kind of broadcast receiving apparatus which receives a broadcast program and program information, and provides a user with them.

As illustrated in FIG. 1, the DTV may include a broadcast receiving unit 110, a broadcast processing unit 120, a broadcast output unit 130, a user input unit 140, a control unit 150, a graphical user interface (GUI) generation unit 160, a storage unit 170, and an Internet interface 180.

The broadcast receiving unit 110 is tuned to one of broadcasts which are received through air or a cable in a wired or wireless way, and demodulates the tuned broadcast.

The broadcast processing unit 120 processes a broadcast signal output by the broadcast receiving unit 110. The broadcast processing unit 120 may include a broadcast separation unit 121, an audio decoding unit 123, an audio processing unit 125, a video decoding unit 127, and a video processing unit 129.

The broadcast separation unit 121 separates an audio signal, a video signal, and additional data from the broadcast signal. The audio signal and the video signal are transmitted to the audio decoding unit 123 and the video decoding unit 127, respectively so as to be used to provide a digital broadcast program. The additional data are transmitted to the control unit 150. The additional data may be the Program and System Information Protocol (PSIP) information. The PSIP information contains information regarding a broadcast program.

The audio decoding unit 123 decodes the audio signal so that a decompressed audio signal may be output.

The audio processing unit 125 converts the decoded audio signal into an audio signal having a format which can be output through a speaker of the DTV.

The video decoding unit 127 decodes the video signal so that a decompressed video signal may be output.

The video processing unit 129 converts the decoded video signal into a video signal having a format which can be output through a display of the DTV. To this end, the video processing unit 129 performs color signal processing and scaling of the decoded video signal.

The GUI generation unit 160 generates a GUI to be displayed by operation of the control unit 150. The GUI may include a GUI for receiving a user command to perform a function of the DTV, and a GUI for reporting an operating state of the DTV. In addition, the GUI may include a GUI for providing the user with broadcast program information.

The GUI is transmitted to the video processing unit 129 and is added to video to be displayed on the display.

The output unit 130 provides the user with video and audio corresponding to the video signal and the audio signal respectively output by the broadcast processing unit 120. The output unit 130 may include an audio output unit 131 and a video output unit 135.

The audio output unit 131 outputs the audio signal output by the audio processing unit 125 through the speaker, and the video output unit 135 outputs the video signal output by the video processing unit 129 through the display.

The storage unit 170 stores information regarding a broadcast program received by the broadcast receiving unit 110, and a program which is needed to operate the DTV The storage unit 170 may be implemented with a hard disk, a non-volatile memory, or the like.

The Internet interface 180 is connected to an external server through the Internet, and receives information regarding a program from the external server. That is, if a user command to request information regarding a program is input, the Internet interface 180 receives the information regarding the program which is stored in the external server, and transmits the information to the control unit 150.

As described above, additional data separated from a broadcast signal contain program information. Accordingly, the user can select and use program information extracted from additional data or program information extracted from data received through the Internet interface 180. For example, if the user desires simple program information such as a broadcasting time of a program, program information extracted from additional data may be used, and if the user desires detailed information such as filmography of an actor, program information extracted from data received through the Internet interface 180 may be used.

The user input unit 140 transmits a user command input through a remote control (not shown) or through an operation button provided on a front panel of the DTV to the control unit 150.

The control unit 150 controls the overall operation of the DTV according to a user command received from the user input unit 140. More specifically, the control unit 150 controls the broadcast receiving unit 110, the broadcast processing unit 120, and the broadcast output unit 130 to receive and output a broadcast program selected by the user.

The control unit 150 generates a program information screen as diverse events occur. The program information screen recited herein refers to a screen that displays program information of a broadcast for each channel. In this exemplary embodiment, the program information screen may display only information regarding a current broadcast program for each channel or may display information regarding a subsequet broadcast program together according to diverse conditions.

For example, the control unit 150 may determine whether only information regarding a current broadcast program of a channel is displayed or information regarding a subsequent broadcast program is displayed together, based on a finish time of the current broadcast program, and may generate a program information screen accordingly.

For another example, the control unit 150 may determine whether only information regarding a current broadcast program of a channel is displayed or information regarding a subsequent broadcast program is displayed together based on a time when a display command for program information is input, and may generate a program information screen accordingly.

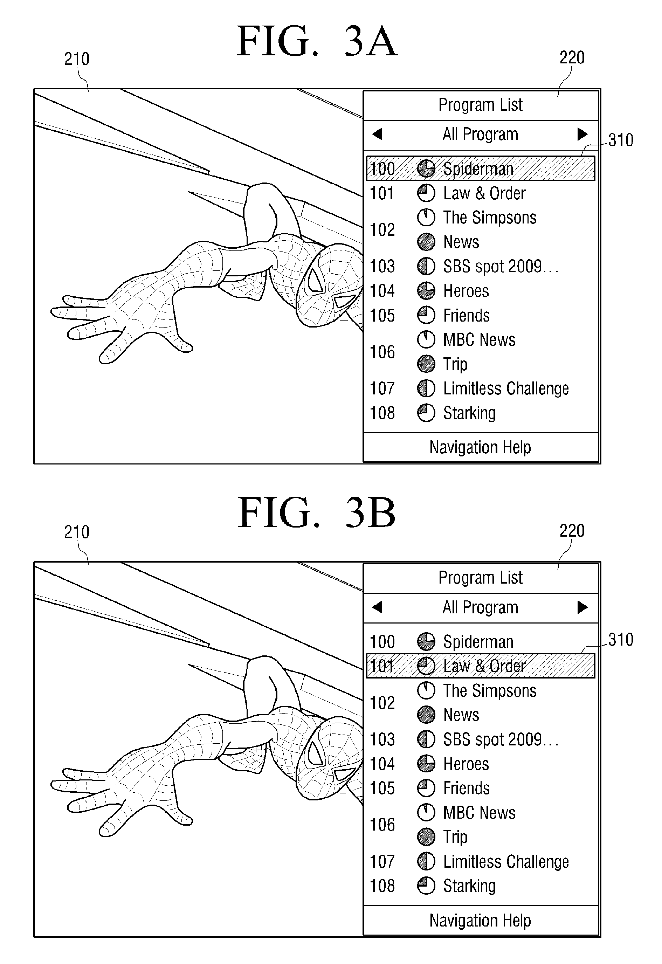

The examples of the program informatoin screen will be described in detail below with reference to FIGS. 3A to 3C and thus a detailed description thereof is omitted here.

The control unit 150 may generate a program information screen by itself or may control a separate component to generate a program information screen. That is, the control unit 150 may control the GUI generation unit 160 to generate a GUI for the program information screen. In the present specification, controlling a separate element such as the GUI generation unit 160 to generate the program inforamtion screen is included in the operation of the control unit 150 for generating the program information screen.

In addition, the control unit 150 may itemize program information for each channel according to a user command to request a program information screen, and may control the GUI generation unit 160 to generate a program information screen in which an item can be selected.

If the user selects one of the items displayed on the program information screen, the control unit 150 controls the broadcast processing unit 120 and the broadcast output unit 130 to display a program being currently broadcast via a channel corresponding to the selected item.

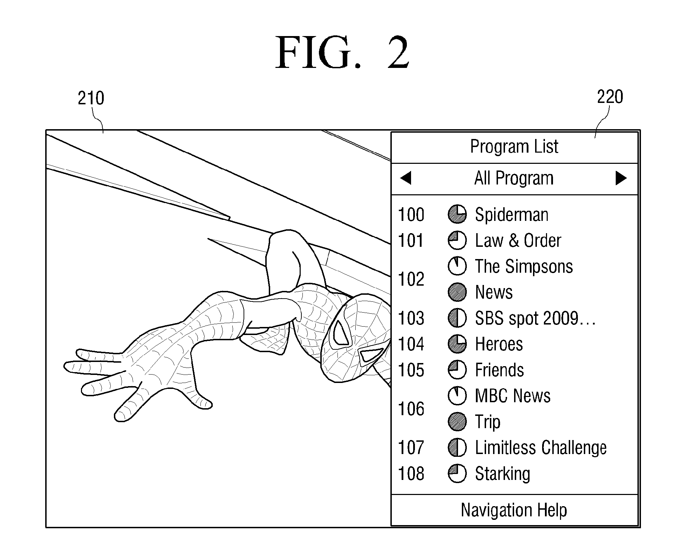

An example of a program information screen which is displayed in response to a user command to request the program information screen is described below with reference to FIG. 2.

FIG. 2 illustrates a program information screen according to an exemplary embodiment.

If a user command to request output of program information is input, a current broadcast program image 210 is displayed on the left side of the display and a program information screen 220 is displayed on the right side of the display as illustrated in FIG. 2.

The program information screen 220 is displayed according to channels, and displays broadcast program information related to a current time rather than broadcast program information related to all times.

The reason why only broadcast program information related to a current time is displayed is that program information which the user really wishes to know is not a broadcast program to be broadcast in the far future, but a broadcast program being currently broadcast on each channel or a subsequent broadcast program following the current broadcast program on each channel. Therefore, since the DTV displays information regarding only the current broadcast program and the subsequent broadcast program, the conventional problem that there is a restriction in space to display broadcast program information and the user cannot intuitively know broadcast program information can be removed.

In addition, the program information screen 220 is displayed according to channels, and displays ⓐ information regarding a current broadcast program or ⓑ information regarding a current broadcast program and a subsequent broadcast program, based on a finish time of a current broadcast program of each channel.

In the example shown in FIG. 2, channels 100, 101, 103, 104, 105, 107, and 108 display ⓐ information regarding only a current broadcast program, and channels 102 and 106 display ⓑ information regarding a current broadcast program and a subsequent broadcast program.

Since information regarding a current broadcast program of each channel or information regarding a subsequent broadcast program of each channel is provided to the user, the user can directly utilize the provided information. For example, if the user viewing a broadcast on channel 100 requests the program information screen 220 to view a broadcast on another channel, the user may receive program information as illustrated in FIG. 2. Therefore, the user intuitively knows programs broadcast on other channels, and selects a broadcast from the program information and schedule or changes to the selected broadcast.

A case of displaying ⓐ information regarding only a current broadcast program, and a case of displaying ⓑ information regarding a current broadcast program and a subsequent broadcast program may be divided according to the following.

If the user requests the program information screen 220, the DTV itemizes and displays information regarding a current broadcast program according to channels, so that the user can select a desired broadcast program. This is because program information which the user wishes to know is not a broadcast program to be broadcast in the far future, but a current broadcast program of each channel.

If the user requests the program information screen 220, the DTV itemizes and displays information regarding a current broadcast program and a subsequent broadcast program according to channels, so that the user can select a desired broadcast program. This is because if the current broadcast program is going to be finished shortly, program information which the user wishes to know is a subsequent broadcast program to be started after the current broadcast program is finished. This is the case of displaying information regarding a current broadcast program and a subsequent broadcast program.

Whether or not the current broadcast program is going to be finished shortly is determined according to whether or not the difference between a point of time in which the user requests the program information screen 220 and a point of time in which the current broadcast program is going to be finished is within a preset range. For example, on a channel broadcasting a program which will be finished within 15 minutes of a point of time in which the user requests the program information screen 220, information regarding the current broadcast program and information regarding a subsequent broadcast program are displayed together.

The preset range may be changed by the user, and may be set differently according to a channel, genre of program, or program broadcast time.

For example, the user may set channel 100 to display information regarding a current program and a subsequent program when the current program is finished within 20 minutes. In a case of a drama program, although the drama program starts after one hour, the user may set the drama program to be displayed.

Program information displayed on the program information screen 220 may include the broadcasting time, genre, title, broadcasting channel, previous plot, and cast of a program, and may be itemized and displayed using text, number, symbol, or figure. In FIG. 2, a channel, the remaining running time of a program, and the program title are displayed as program information.

In FIG. 2, a figure between a channel number and a title is a pie chart indicating information regarding the remaining running time. Using the pie chart, the user may intuitively know the remaining running time and may refer to the pie chart when selecting a channel.

Reporting the remaining running time using such a pie chart is merely an example for convenience of description. Whatever enables the user to intuitively know program information may belong to the technical idea.

The DTV enables selection of an item displayed on the program information screen 220. Accordingly, the user may change a channel by selecting an item. Detailed description is given with reference to FIGs. 3A to 3D.

FIGs. 3A to 3D illustrate the process of changing a channel according to an exemplary embodiment.

As illustrated in FIG. 3A, if the user requests a broadcast program information screen while viewing a current broadcast program, a current broadcast program image 210 is displayed on the left side of the display, and a program information screen 220 is displayed on the right side of the display. In addition, as illustrated in FIG. 3A, a program information item according to a channel on the program information screen 220 may be highlighted.

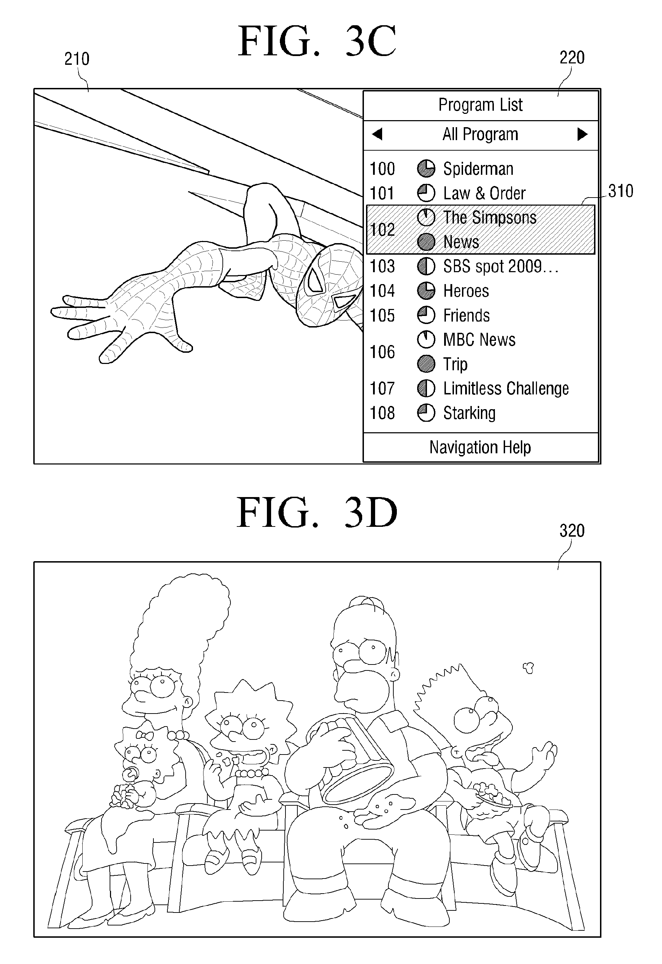

The user may move a highlighted area using a button such as a '▼' button provided on the remote control. For example, if the user presses the '▼', button once, the highlighted area is moved to a program information item of channel 101 as illustrated in FIG. 3B, and if the user presses the '▼' button one more time, the highlighted area is moved to a program information item of channel 102 as illustrated in FIG. 3C.

If the user presses an 'Enter' button provided on the remote control, the user may view a broadcast on the selected channel.

FIG. 3D illustrates an image displayed on the display when the user selects channel 102 using the 'Enter' button. The display shows a current broadcast program image.

In this exemplary embodiment, the highlighted area is moved according to a channel, but this is merely an example for convenience of description. It is also possible to move the highlighted area according to a program information item. For example, the highlighted area may be positioned on one of broadcast programs "The Simpsons 10" and "News" which are provided by channel 102. However, even though the highlighted area may be positioned on one of "The Simpsons 10" and "News", if one of "The Simpsons 10" and "News" is selected, "The Simpsons 10" is displayed on the display as illustrated in FIG. 3D. This is because a current broadcast program on channel 102 is "The Simpsons 10".

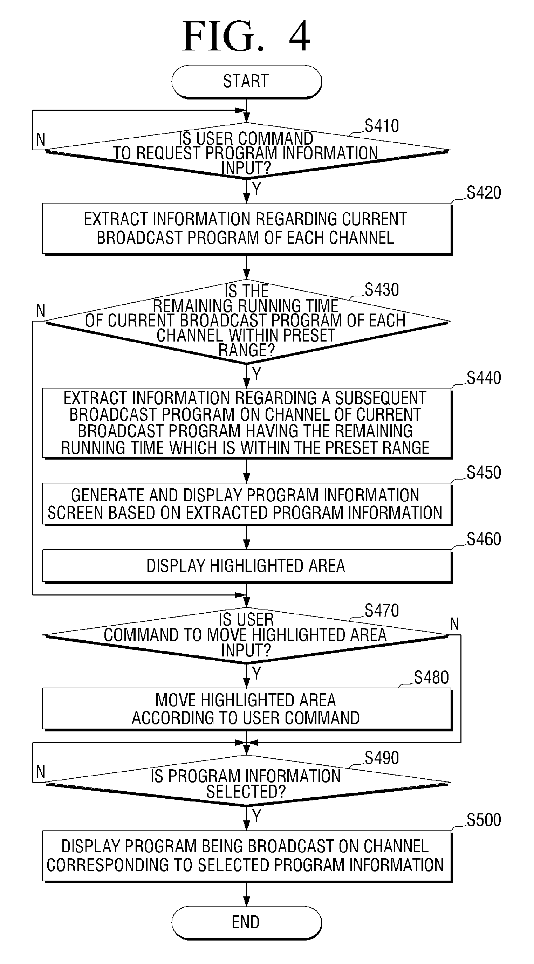

A method for providing broadcast program information according to an exemplary embodiment is described below with reference to FIG. 4.

FIG. 4 is a flow chart illustrating a method for providing broadcast program information according to an exemplary embodiment.

If a user command to request program information is input (S410), the DTV extracts information regarding a current broadcast program of each channel (S420).

In addition, the DTV determines whether or not the remaining running time of the current broadcast program of each channel is within a preset range (S430), information regarding a subsequent broadcast program of a channel on a current broadcast program having the remaining running time which is within the preset range is extracted (S440). The subsequent broadcast program is a program which will be broadcast after the current broadcast program is finished.

The DTV generates and displays a program information screen based on the extracted program information (S450). The extracted program information may include the program information extracted in operation S420, and the program information extracted in operation S440.

In addition, the DTV displays a highlighted area to select program information (S460), and if the user inputs a command to move the highlighted area (S470-Y), the highlighted area is moved according to the command (S480).

Subsequently, if the user inputs a command to select program information positioned in the highlighted area (S490-Y), the DTV displays a program being broadcast on a channel corresponding to the selected program information (S500).

As described above, the DTV selectively provides program information which the user actually needs, so the user can view a program information screen with high view stability.

In the exemplary embodiment, if a user command to request a program information screen is input, a current broadcast program image 210 is displayed on the left side of the display and a program information screen 220 is displayed on the right side of the display. However, the position of the current broadcast program image 210 and the program information screen 220 is not limited thereto. The position of the current broadcast program image 210 and the program information screen 220 may vary. In addition, the technical idea may be applied to, for example, when the position of the current broadcast program image 210 is displayed on the entire display and the program information screen 220 is translucently displayed thereon.

In the exemplary embodiment, the DTV is given to describe a method for providing program information, but this is merely an example. The technical idea may be applied to other broadcast receiving apparatuses or other display apparatuses.

In the exemplary embodiment, program information related to a current program is displayed according to channels. The technical idea may be applied to, for example, when program information related to a current program is displayed not for all the channels but for a channel designated by the user or a current channel. In this case, view stability regarding broadcast program information may become higher.

In the exemplary embodiment, a broadcast channel displayed on the display may be changed by moving a highlighted area, but this is merely an example. Also, scheduling of broadcast and scheduling of recording as well as change of channel may be possible. However, in the case of scheduling of broadcast and scheduling of recording, moving the highlighted area according to program information may be better than moving the highlighted area according to a channel as illustrated in FIG. 3C.

In the exemplary embodiment, if the remaining running time of a current broadcast program is within a preset range, information regarding a subsequent broadcast program is provided together. However, if the subsequent broadcast program is short and the running time of the subsequent broadcast program is also within the preset range, information regarding three or more programs for a single channel may be displayed.

Therefore, since program information which the user actually needs is selectively provided, the user may view a program information screen with greater view stability.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing program information, the method comprising:
generating a program information screen for channels, the program information screen displaying only information regarding a current broadcast program of at least one of the channels, or both the information regarding the current broadcast program and information regarding a subsequent broadcast program following the current broadcast program, based on a finish time of the current broadcast program; and
displaying the generated program information screen.

2. The method according to claim 1, wherein in the generating the program information screen, in a case of the at least one of the channels having a remaining running time of the current broadcast program which is within a preset range, both the information regarding the current broadcast program and the information regarding the subsequent broadcast program of the at least one of the channels are displayed.

3. The method according to claim 1, wherein in the generating the program information screen, in a case of the at least one of the channels having a remaining running time of the current broadcast program which is not within a preset range, only the information regarding the current broadcast program of the at least one of the channels is displayed.

4. The method according to claim 1, wherein the generating the program information screen comprises:
itemizing program information and configuring the program information screen according to each of channels so that a user can select an item,
wherein in the displaying, if an item is selected on the program information screen, a current broadcast program of one of the channels corresponding to the selected item is displayed.

5. The method according to claim 1, wherein on the program information screen, the information regarding the current broadcast program and the information regarding the subsequent broadcast program are displayed in differently.

6. The method according to claim 1, wherein the information regarding the current broadcast program contains a finish time of the current broadcast program.

7. The method according to claim 1, wherein in the generating the program information screen, the information regarding the subsequent broadcast program is displayed according to whether or not a remaining running time of the current broadcast program is within a preset range, and
the preset range is changeable by a user, and is set according to a channel, genre of program, or a program broadcast time.

8. A method for providing program information, the method comprising:
generating a program information screen if a command to display program information is input, the program information screen displaying only information regarding a current broadcast program, or both the information regarding the current broadcast program and information regarding a subsequent broadcast program following the current broadcast program, based on a time when the command is input; and
displaying the generated program information screen.

9. A display apparatus, comprising:
a control unit which generates a program information screen for channels, the program information screen displaying only information regarding a current broadcast program of a channel or both the information regarding the current broadcast program and information regarding a subsequent broadcast program following the current broadcast program based on a finish time of the current broadcast program; and
a display unit which displays the program information screen.

10. The display apparatus according to claim 9, wherein in a case of the channel having a remaining running time of the current broadcast program which is within a preset range, the control unit configures the program information screen to display both the information regarding the current broadcast program and the information regarding the subsequent broadcast program of the channel.

11. The display apparatus according to claim 9, wherein in a case of the channel having a remaining running time of the current broadcast program which is not within a preset range, the control unit configures the program information screen to display only the information regarding the current broadcast program of the channel.

12. The display apparatus according to claim 9, wherein the control unit generates the program information screen which itemizes and displays program information for channels so that a user can select an item, and if an item is selected, the control unit controls the display unit to display a current broadcast program of a channel corresponding to the selected item.

13. The display apparatus according to claim 9, wherein the control unit configures the program information screen to display the information regarding the current broadcast program and the information regarding the subsequent broadcast program differently.

14. The display apparatus according to claim 9, wherein the information regarding the current broadcast program contains a finish time of the current broadcast program.

15. The display apparatus according to claim 9, wherein the control unit displays the information regarding the subsequent broadcast program according to whether or not a remaining running time of the current broadcast program is within a preset range, and
the preset range is changeable by a user, and is set according to a channel, genre of program, or a program broadcast time.
